# FASCICULE DE BREVET EUROPEEN

(11) **EP 2 647 513 B1**
(45) Date de publication et mention de la délivrance du brevet: **10.09.2014**
(21) Numéro de dépôt: 13161856.3
(22) Date de dépôt: 29.03.2013
(51) Int. Cl.: B60H 1/00, F16L 55/033

(54) **Canalisation pour circuit de climatisation intégrant un dispositif réducteur de bruit, et un tel circuit l'incorporant**
Leitung für einen Klimaanlagenkreislauf mit Lärmreduzierungsvorrichtung, und Klimaanlagenkreislauf mit einer solchen Vorrichtung
Air conditioning circuit duct provided with a noise reducing device, and circuit including it

(30) Priorité: 03.04.2012 FR 1253036
(43) Date de publication de la demande: 09.10.2013
(73) Titulaire: HUTCHINSON, 75008 Paris (FR)
(72) Inventeur: Auclair, Alexandre, 45210 FERRIERES EN GÂTINAIS (FR); Menou, Pierre, 45200 MONTARGIS (FR)
(74) Mandataire: Bolinches, Michel Jean-Marie

(56) Documents cités:
- EP-A1- 1 864 838
- EP-A1- 2 106 943
- WO-A1-2012/013874
- US-B1- 7 325 570

## Description

La présente invention concerne une canalisation pour fluide sous pression pour un circuit de climatisation d'un véhicule automobile ou d'un bâtiment (i.e. climatisation industrielle, par exemple), la canalisation comprenant une conduite comportant un embout mâle qui contient un dispositif réducteur de bruit et un embout femelle connecté de manière étanche à l'embout mâle, et un tel circuit de climatisation incorporant cette canalisation.

D'une manière générale, un dispositif réducteur de bruit pour circuit de climatisation d'un véhicule automobile est formé d'une capacité acoustique qui est montée en ligne dans une canalisation de ce circuit entre un compresseur et un évaporateur, de sorte à atténuer la transmission des ondes sonores générées principalement par le compresseur et se propageant dans le fluide frigorigène à l'intérieur de la conduite, via un élargissement brusque de la section de passage du fluide pénétrant dans cette capacité. En effet, cet élargissement de la section de passage à l'entrée dans la capacité se traduit de manière connue par la création d'une onde sonore en opposition de phase s'additionnant à l'onde perturbatrice pour générer une onde atténuée d'amplitude plus réduite.

Une telle capacité acoustique est usuellement située à un emplacement de la canalisation du circuit de climatisation qui est relativement éloigné du compresseur, essentiellement à cause du volume qu'occupe cette capacité et de la place qui fait souvent défaut dans le groupe motopropulseur du véhicule automobile comprenant ce compresseur, pour installer la capacité à proximité immédiate de ce dernier et, dans les cas où cette installation de la capacité à proximité immédiate du compresseur serait néanmoins envisageable, à cause des vibrations mécaniques indésirables qui sont générées par la présence de la masse additionnelle formée par cette capacité et qui peuvent être une source de rupture de la canalisation correspondante.

Cet éloignement relatif de la capacité acoustique vis-à-vis du compresseur a notamment pour effet de générer une zone de résonance entre ces deux éléments, dans laquelle le bruit peut s'autoalimenter. Il en résulte que l'atténuation du bruit dans la canalisation du circuit de climatisation est encore perfectible.

Ces capacités acoustiques permettent ainsi d'atténuer dans une certaine mesure le bruit généré par le compresseur et se propageant dans la canalisation du circuit de climatisation. Cependant, elles présentent en même temps l'inconvénient de générer des pertes de charge significatives pour le fluide les traversant, du fait de la modification brusque de la section de passage qui les caractérise. En outre, elles présentent un coût de fabrication et d'implantation sur la canalisation du circuit de climatisation qui est relativement élevé.

Le document EP-A1-1 864 838 au nom de la Demanderesse présente dans ce contexte une conduite pour fluide frigorigène d'un tel circuit de climatisation qui permet de remédier à cet inconvénient tout en procurant une atténuation acoustique satisfaisante dans ce circuit. Cette conduite est pourvue dans son espace interne d'un dispositif réducteur de bruit dont la face radialement externe épouse la paroi de la conduite et qui présente deux extrémités d'entrée et de sortie formant au moins un canal axial de passage du fluide dans le dispositif.

Le document EP-A1-2 106 943 également au nom de la Demanderesse présente une canalisation pour fluide frigorigène d'un tel circuit de climatisation comportant un embout mâle qui est destiné à être connecté de manière étanche à un embout femelle et à l'intérieur duquel est monté un dispositif réducteur de bruit globalement tubulaire définissant entre deux extrémités de ce dispositif un canal axial de passage du fluide et avec l'embout mâle au moins un volume mort annulaire qui ne communique pas avec ce canal par l'une au moins de ces deux extrémités. Ce dispositif réducteur de bruit procure également une atténuation satisfaisante dans ce circuit.

Un but de la présente invention est de proposer une nouvelle structure de canalisation pour fluide sous pression de type gazeux ou supercritique d'un circuit de climatisation d'un véhicule automobile ou d'un bâtiment, de type à embout mâle intégrant un dispositif réducteur de bruit pouvant être du type décrit dans les documents précités EP-A1-1 864 838 ou EP-A1-2 106 943, à titre non limitatif, qui procure des résultats acoustiques satisfaisants sans être liée à une géométrie particulière de dispositif réducteur de bruit, tout en présentant un coût de fabrication et un encombrement réduits, cette canalisation comprenant :
- une conduite comportant un embout tubulaire mâle de diamètre interne nominal D0 et un embout tubulaire femelle qui est connecté de manière étanche à l'embout mâle en une portion axiale élargie de l'embout femelle ou bien à proximité immédiate d'une portion axiale élargie de l'embout mâle, cette portion élargie d'embout mâle ou femelle présentant un diamètre interne maximal D2 et l'embout femelle présentant un diamètre interne nominal D0' identique ou non à D0, et
- un dispositif réducteur de bruit globalement tubulaire qui est monté axialement et radialement à l'intérieur de l'embout mâle et qui définit, entre deux extrémités axialement interne et externe de ce dispositif par rapport à l'embout mâle (par « interne » et « externe », on entend ici les extrémités du dispositif respectivement tournées axialement vers l'intérieur de l'embout mâle à l'opposé de l'embout femelle et axialement vers l'extérieur de cet embout mâle vers l'embout femelle), au moins un canal de passage du fluide dans la direction de l'axe de la conduite, l'extrémité externe du dispositif étant montée de manière étanche contre un bord terminal de l'embout mâle au droit de l'embout femelle.

A cet effet, la canalisation de l'invention est telle que ladite portion élargie de l'embout mâle ou femelle présente respectivement, à partir de ladite extrémité axialement interne ou externe du dispositif située au droit de cette portion élargie, une longueur L2 telle que L2 ≥ 0,6 . D, où dans ce produit D désigne la valeur commune ou minimale parmi D0 et D0' (i.e. D = D0 = D0' ou bien D = min(D0 ; D0')).

On notera que cette valeur anormalement élevée utilisée pour cette longueur L2 permet, compte tenu du diamètre interne minimal D1 du dispositif réducteur de bruit qui définit une section de passage relativement réduite pour le fluide et du ratio D2 / D1 (supérieur à 1) entre ce dispositif et la portion élargie de l'embout mâle ou femelle, de positionner la valeur de rupture d'impédance dans le même ordre de grandeur que celui d'une capacité acoustique et ainsi d'obtenir avantageusement une efficacité acoustique améliorée sans modification du diamètre nominal D de la conduite ni du diamètre D2 de la portion élargie de l'embout mâle ou femelle.

De préférence en relation avec un circuit de climatisation spécifiquement de véhicule automobile, ladite longueur L2 de ladite portion axiale élargie peut être telle que L2 ≥ 10 mm.

Il convient de noter que cette longueur L2 pour la portion élargie d'embout mâle ou femelle, qui est ainsi supérieure au demi-diamètre 0,5 . D (ou rayon nominal de la conduite) est très élevée notamment en comparaison des longueurs L2 existantes pour les embouts femelles standards utilisés dans ces circuits de climatisation, mesurées entre le bord terminal de l'embout mâle et la naissance de cette portion élargie, lesquelles sont toujours très faibles en étant usuellement comprises entre 0 mm et 1 mm seulement. En effet, jamais à ce jour n'ont été fabriqués dans l'industrie de tels embouts mâles ou femelles avec cette « sur-longueur » L2 d'une dizaine de mm pour la portion élargie, avec notamment comme motifs dissuasifs pour les industriels le coût et la durée de fabrication accrus par rapport à ces embouts mâles ou femelles standards dus à l'utilisation d'un outillage supplémentaire.

Encore plus avantageusement, ladite longueur L2 de cette portion axiale élargie peut être telle que 1,5 . D ≤ L2 ≤ 2,4 . D.

Dans ce cas, ladite longueur L2 de cette portion axiale élargie peut être telle que 25 mm ≤ L2 ≤ 40 mm, de préférence pour un circuit de climatisation de véhicule automobile.

Selon un premier mode de réalisation de l'invention, l'embout femelle présente une zone terminale de raccordement comprenant ladite portion axiale élargie qui présente une géométrie globalement cylindrique de longueur supérieure à ladite longueur L2 pour le montage étanche d'un tronçon terminal de cette portion élargie radialement sur un tronçon d'extrémité de l'embout mâle, via deux brides annulaires enserrant ces deux tronçons et incluses dans la canalisation, cette portion élargie se prolongeant à l'opposé de l'embout mâle via une portion de liaison convergente par une autre portion globalement cylindrique présentant ledit diamètre interne nominal D0'.

Selon un second mode de réalisation de l'invention, l'embout mâle présente axialement au-delà de l'embout femelle ladite portion axiale élargie, laquelle présente une géométrie globalement cylindrique de longueur supérieure à ladite longueur L2, l'embout femelle présentant une zone terminale de raccordement montée de manière étanche sur un tronçon d'extrémité de l'embout mâle situé en deçà de cette portion élargie via un organe annulaire de sertissage qui enserre cette zone et qui coopère en butée avec ce tronçon d'extrémité de manière étanche, cette portion élargie se prolongeant en ses deux extrémités par deux tronçons respectifs convergents dont l'un opposé à l'embout femelle définit ledit diamètre interne nominal D0 et l'autre se prolonge par ledit tronçon d'extrémité.

Selon une autre caractéristique de l'invention, ladite extrémité axialement externe du dispositif réducteur de bruit peut comporter une collerette radiale montée contre un renflement d'extrémité de l'embout mâle définissant ledit bord terminal de ce dernier.

Selon un exemple de réalisation de l'invention, le dispositif réducteur de bruit délimite avec l'embout mâle, axialement entre lesdites extrémités axialement interne et externe du dispositif, au moins un volume mort annulaire qui ne communique pas avec ledit canal par l'une au moins de ces deux extrémités. On pourra se reporter au document précité EP-A1-2 106 943 pour une description précise d'un tel volume mort annulaire, qui par définition ne contribue pas au débit circulant de fluide frigorigène hors de la conduite (i.e. en plus du fluide frigorigène entrant dans la conduite par l'extrémité amont du dispositif et en sortie par son extrémité aval) et a pour effet de restreindre la section de passage du fluide dans cette conduite, ce qui permet d'améliorer l'atténuation acoustique dans les hautes fréquences.

En particulier et conformément à ce premier exemple, ladite extrémité axialement interne du dispositif peut être également montée de manière étanche contre l'embout mâle, de telle sorte que ledit volume mort annulaire s'étende de ladite extrémité axialement interne à ladite extrémité axialement externe en ne communiquant pas avec ledit canal (voir la figure 2 du document EP-A1-2 106 943). Dans ce cas, ce volume mort annulaire est conçu pour ne pas recevoir le fluide frigorigène, mais uniquement pour former la restriction précitée pour la section de passage du fluide dans le dispositif.

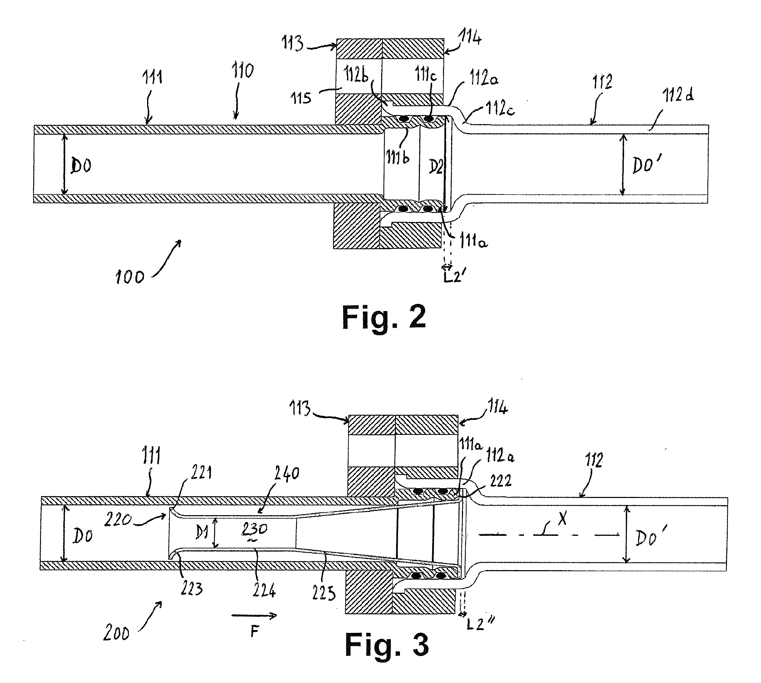

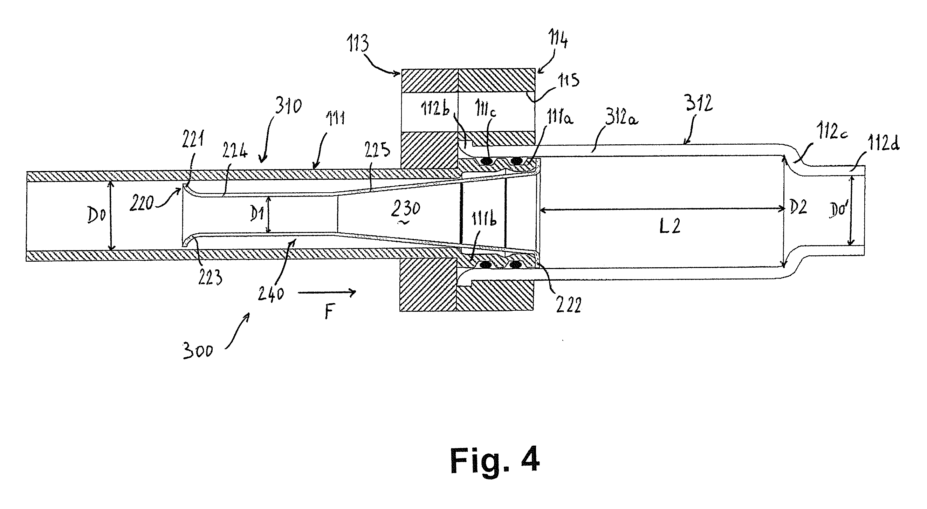

En variante, cette extrémité axialement interne peut former avec l'embout mâle au moins une zone d'admission continue ou discontinue pour le fluide qui est localisée radialement entre cette extrémité axialement interne et l'embout mâle et qui communique avec ledit volume mort annulaire (voir les figures 3 et 4 de ce même document). Dans ce cas, ce volume mort annulaire est bien destiné à recevoir le fluide frigorigène par l'extrémité axialement interne du dispositif, mais en s'opposant à sa circulation hors de la conduite du fait du confinement du fluide dans ce volume par l'autre extrémité axialement externe non communicante du dispositif.

Egalement selon cet exemple de réalisation définissant ledit ou chaque volume mort annulaire, ce dispositif réducteur de bruit peut avoir son extrémité axialement interne qui converge vers un tronçon intermédiaire sensiblement cylindrique ou prismatique du dispositif relié à ladite extrémité axialement externe par un tronçon aval divergent, comme illustré par exemple dans ce document EP-A1-2 106 943.

Selon un autre exemple de réalisation de l'invention, le dispositif réducteur de bruit présente une face externe au moins en partie cylindrique qui épouse la face radialement interne de l'embout mâle, comme par exemple illustré dans l'autre document précité EP-A1-1 864 838.

On notera toutefois que d'autres géométries que celles présentées dans ces deux documents sont utilisables pour le dispositif réducteur de bruit d'une canalisation selon l'invention, l'essentiel étant que ce dispositif soit monté de manière étanche contre le bord terminal de l'embout mâle au droit de l'embout femelle.

Avantageusement, ce dispositif peut être entièrement réalisé en un matériau rigide, tel qu'un métal auquel cas l'épaisseur de sa paroi est de l'ordre de 0,1 mm, ou tel qu'une matière plastique par exemple du polyamide 6.6 auquel cas l'épaisseur de sa paroi est de l'ordre de 1 mm.

Il convient de noter que ce dispositif globalement tubulaire qui est reçu dans l'embout mâle présente une structure qui permet de l'insérer à une extrémité de la canalisation située à proximité immédiate du compresseur, de sorte que l'atténuation acoustique s'en trouve améliorée contrairement aux capacités acoustiques de l'art antérieur que l'on monte usuellement à distance du compresseur pour les raisons exposées ci-dessus.

Un circuit de climatisation selon l'invention d'un véhicule automobile ou d'un bâtiment est du type comportant des canalisations destinées à véhiculer un fluide frigorigène gazeux sous pression et au moins un dispositif réducteur de bruit inséré dans au moins l'une de ces canalisations, cette canalisation contenant ce dispositif étant telle que définie ci-dessus en relation avec la présente invention.

Selon une autre caractéristique avantageuse de l'invention spécifique à un circuit de climatisation pour véhicule automobile, la ou chaque canalisation dans laquelle est inséré ledit au moins un dispositif peut être raccordée directement à l'aspiration (i.e. l'entrée) et/ou au refoulement (i.e. la sortie) dudit compresseur, respectivement dans une ligne basse pression et/ou dans une ligne haute pression dudit circuit, et ce dispositif peut être avantageusement monté à l'extrémité de cette canalisation qui débouche sur ladite aspiration et/ou sur ledit refoulement du compresseur, respectivement dans ladite ligne basse pression et/ou dans ladite ligne haute pression. En d'autres termes, on notera que ce dispositif est utilisable tant dans une ligne basse pression que dans une ligne haute pression d'un tel circuit de climatisation.

On notera à nouveau que ce montage du dispositif réducteur de bruit à proximité immédiate du compresseur permet d'atténuer de manière encore plus satisfaisante le bruit généré par ce dernier à l'intérieur du circuit de climatisation pour véhicule automobile.

A titre encore plus préférentiel, la canalisation dans laquelle est inséré ce dispositif est raccordée directement à l'aspiration du compresseur dans une ligne basse pression de ce circuit.

Le circuit de climatisation selon l'invention peut fonctionner dans les plages usuelles de température et de pression relatives au fluide frigorigène utilisé, i.e. par exemple pour un véhicule automobile à des pressions allant sensiblement de 2 bars à 25 bars pour du « R134a » et allant de plusieurs dizaines de bars à environ 150 bars pour du dioxyde de carbone.

On notera qu'un fluide frigorigène tel que le dioxyde de carbone peut être gazeux à l'aspiration du compresseur dans un tel circuit, alors qu'il peut être supercritique au refoulement de ce compresseur.

D'autres caractéristiques, avantages et détails de la présente invention ressortiront à la lecture de la description suivante d'exemples de réalisation de l'invention, donnés à titre illustratif et non limitatif, ladite description étant réalisée en référence avec les dessins joints, parmi lesquels :
la figure 1 est une vue schématique et en perspective d'un circuit de climatisation selon l'invention pour véhicule automobile, montrant notamment deux lignes basse pression et haute pression de fluide frigorigène gazeux ou supercritique avec divers exemples de positionnement d'une canalisation à dispositif réducteur de bruit selon l'invention,
la figure 2 est une vue en coupe longitudinale d'une canalisation à embouts mâle et femelle de l'art antérieur et dépourvue de dispositif réducteur de bruit, utilisée dans un circuit de climatisation par exemple pour véhicule automobile,
la figure 3 est une vue en coupe longitudinale de la canalisation à embouts mâle et femelle de la figure 2 mais avec en plus un dispositif réducteur de bruit inséré dans l'embout mâle conformément à l'enseignement du document précité EP-A1-2 106 943,
la figure 4 est une vue en coupe longitudinale d'une canalisation selon un premier mode de réalisation de l'invention qui se différencie uniquement de celle de la figure 3 par l'embout femelle utilisé, le dispositif réducteur de bruit étant inchangé,
la figure 5 est une vue en coupe longitudinale d'une autre canalisation à embouts mâle et femelle de l'art antérieur pour circuit de climatisation par exemple pour véhicule automobile, dépourvue de dispositif réducteur de bruit à l'instar de la figure 2,
la figure 6 est une vue en coupe longitudinale de la canalisation de la figure 5 mais avec en plus, à l'instar de la figure 3, le même dispositif réducteur de bruit inséré dans l'embout mâle,
la figure 7 est une vue en coupe longitudinale d'une canalisation selon un second mode de réalisation de l'invention qui se différencie uniquement de celle de la figure 6 par l'embout mâle utilisé, le dispositif réducteur de bruit étant inchangé,
la figure 8 est un graphique illustrant pour cinq essais acoustiques réalisés respectivement avec les canalisations « témoin » des figures 2, 3 et avec trois canalisations selon l'invention de la figure 4 différant entre elles par ladite longueur L2, l'évolution de la fonction de transfert Ps/Pe (ratio entre pressions acoustiques de sortie et d'entrée) en fonction de la fréquence (Hz), et
la figure 9 est un graphique correspondant à celui de la figure 5 mais recadré à une plus grande échelle, montrant l'évolution de cette fonction de transfert pour la canalisation « témoin » de la figure 3 et ces trois canalisations selon l'invention.

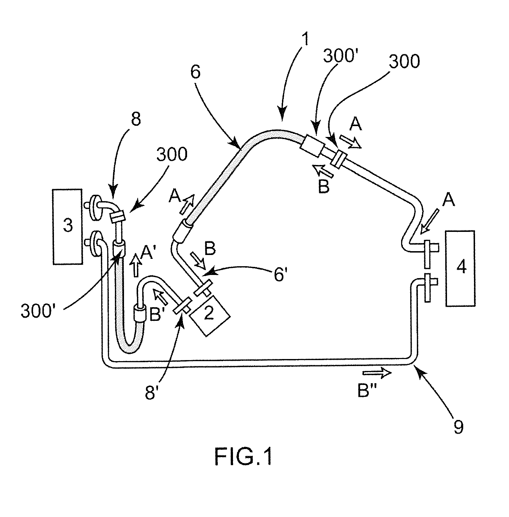

Le circuit de climatisation 1 illustré à la figure 1 est de manière connue un circuit fermé qui comprend plusieurs éléments répartis à l'intérieur du compartiment moteur du véhicule, notamment un compresseur 2, un condenseur ou refroidisseur 3, un réservoir déshydratant (non visible), un système de détente (non visible) et un évaporateur 4, et dans lequel circule un fluide frigorigène gazeux ou supercritique et sous pression (tel que du « R134a » ou du dioxyde de carbone, à titre non limitatif) ou bien un fluide liquide. Tous ces éléments sont reliés entre eux par des lignes rigides ou flexibles constitués par des portions tubulaires rigides et/ou souples, qui présentent en chacune de leurs extrémités des moyens de raccordement étanches.

Plus précisément, un circuit 1 selon l'invention comporte :
- une ligne basse pression 6, 6' destinée à véhiculer le fluide frigorigène gazeux entre le compresseur 2 et l'évaporateur 4, et un dispositif réducteur de bruit 300 ou 300' selon l'invention qui est différent des dispositifs connus de type capacités acoustiques et qui peut être monté en ligne dans une conduite 6 ou 6' (dans cette ligne 6, 6', les flèches A indiquent le sens de propagation du bruit généré par le compresseur 2 et les flèches B le sens de circulation du fluide qui est inverse du précédent) ;
- une ligne haute pression 8, 8' pour le fluide frigorigène gazeux ou supercritique qui est raccordée au compresseur 2 et au condenseur 3 et qui peut également incorporer en ligne un tel dispositif réducteur de bruit 300 ou 300' (dans cette ligne 8, 8', la flèche A' indique le sens de propagation du bruit généré par le compresseur 2 et la flèche B' le sens de circulation du fluide qui est le même que le précédent) ; et
- une ligne haute pression liquide 9 qui est raccordée au condenseur 3 et à l'évaporateur 4 (dans cette ligne 9, la flèche B" indique le sens de circulation dudit fluide liquide).

On notera que les quatre emplacements illustrés à la figure 1 pour les canalisations 300, 300' selon l'invention ne sont que des exemples schématiques par définition non limitatifs, et que ces canalisations 300, 300' pourraient être positionnées ailleurs dans la ligne basse pression 6, 6' et/ou dans la ligne haute pression 8, 8'.

De manière connue, la capacité acoustique utilisée à ce jour dans la ligne basse pression 6, 6' comporte deux ouvertures respectivement d'entrée et de sortie pour le fluide frigorigène, et l'élargissement de la section de passage pour le fluide qui la caractérise permet d'atténuer les ondes sonores générées par le compresseur 2 et se propageant le long de cette ligne 6, 6'. En contrepartie, cette capacité présente l'inconvénient connu de générer des pertes de charge lors de sa traversée par le fluide.

La canalisation témoin 100 illustrée à la figure 2 comprend une conduite 110 comportant un embout tubulaire mâle 111 de diamètre interne nominal D0 et un embout tubulaire femelle 112 qui est connecté de manière étanche à l'embout mâle 111 en une portion axiale terminale élargie 112a cylindrique de l'embout femelle 112 de diamètre interne maximal D2.

Plus précisément, l'embout mâle 111 comporte un tronçon d'extrémité 111b formant un léger renflement radial qui se termine par un bord terminal 111a et qui est muni de joints d'étanchéité 111c (au nombre de deux dans cet exemple, étant précisé qu'un seul joint 111c serait utilisable en variante) pour recevoir en contact serré et étanche la face radialement interne de la portion élargie 112a de l'embout femelle 112.

Quant à cette portion élargie 112a de l'embout femelle 112, elle présente de manière connue une longueur totale réduite qui fait que sa longueur L2', mesurée axialement entre le bord terminal 111a et le début de cette portion 112a est quasiment nulle, étant par exemple au plus égale à 1 mm environ. Cette portion élargie 112a se termine classiquement par un court rebord 112b la prolongeant radialement vers l'extérieur, et elle naît d'un élargissement 112c sensiblement tronconique formé à partir d'une portion de base 112d cylindrique de diamètre interne nominal D0' (dans cet exemple identique à D0, ce qui donne pour l'ensemble de la canalisation 100 un diamètre interne nominal pour le fluide D = D0 = D0').

Enfin, deux brides de fixation mâle 113 et femelle 114 pour le raccordement de la canalisation 100 à un organe du circuit de climatisation 1, tel que le compresseur 2, viennent enserrer de manière connue respectivement l'embout mâle 111 juste en retrait de son tronçon d'extrémité 111b, et l'embout femelle 112 en sa portion élargie 112a autour de son rebord 112b, de sorte que ces brides 113 et 114 juxtaposées axialement forment à elles deux un alésage traversant 115 recevant un organe de raccordement.

La canalisation 200 de la figure 3 se distingue uniquement de celle 100 de la figure 2, en ce qu'elle incorpore en outre un dispositif réducteur de bruit 220 globalement tubulaire qui est monté axialement et radialement à l'intérieur de l'embout mâle 111 et qui définit entre deux extrémités axialement interne 221 et externe 222 de ce dispositif 220 au moins un canal 230 de passage du fluide frigorigène (voir flèche F pour le sens de l'écoulement de ce fluide) dans la direction de l'axe X de la conduite, l'extrémité externe 222 du dispositif 220 étant montée de manière étanche contre le bord terminal 111a de l'embout mâle 111 et au droit de la portion élargie 112a de l'embout femelle 112. Ce dispositif 220 est identique à celui illustré à la figure 3 du document précité EP-A1-2 106 943, et il présente, dans cet exemple de réalisation :
- un tronçon amont convergent 223 en forme d'hyperboloïde de révolution (i.e. avec une face radialement externe concave) dont l'extrémité interne (ou extrémité amont) 221 de forme circulaire forme avec la face interne de la paroi de l'embout mâle 111 un espace annulaire d'admission de fluide,
- un tronçon intermédiaire cylindrique 224 agencé de manière coaxiale à l'embout mâle 111, et
- un tronçon aval 225 tronconique qui diverge à partir du tronçon 224 et qui se termine par une collerette radiale constituant l'extrémité externe 222 qui est montée de manière étanche contre le bord terminal 111a de l'embout mâle 111 et qui forme l'extrémité extrémité aval du dispositif 220.

On obtient ainsi un volume mort annulaire 240 radialement compris entre le dispositif 220 et la paroi cylindrique de l'embout mâle 111, avec l'espace interne à ce dernier situé en amont de l'extrémité 221 du dispositif 220 qui communique avec ce volume mort 240.

On notera que la longueur L2" relative à la portion élargie 112a, mesurée à la figure 3 axialement entre la collerette externe 222 et le début de cette portion 112a est quasiment nulle, à l'instar de la longueur L2' précitée en référence à la figure 2.

L'ensemble du dispositif 220 peut être entièrement réalisé en un matériau rigide tel que du métal ou en un matériau plastique rigide (e.g. un polyamide 6.6) ou, en variante, en un tel matériau rigide sauf pour le tronçon intermédiaire 224 qui peut être avantageusement réalisé en un caoutchouc de dureté Shore A voisine de 60, ou en un TPV.

En référence à la description suivante de la figure 4, ont été maintenues sur cette dernière les références numériques des figures 2 et 3 dans le cas où ces références désignent les mêmes éléments.

La canalisation 300 selon le premier mode de l'invention illustré à la figure 4 (cette figure n'est pas réalisée à l'échelle de la réalité) se distingue uniquement de celle de la figure 3, en ce que la portion terminale élargie 312a de son embout femelle 312 inclus dans sa conduite 310 présente une longueur totale nettement supérieure à celle de la portion élargie 112a de l'art antérieur, ce qui fait que sa longueur L2 mesurée à partir de la collerette externe 222 du dispositif 220 est égale ou supérieure à 0,6 fois le diamètre interne nominal D de la canalisation 300, dans ce cas où D = D0 = D0' (ou bien en variante à 0,6 fois le plus petit des diamètres internes D0 ou D0'). Comme cela sera expliqué ci-après, la Demanderesse a en effet établi que des résultats particulièrement avantageux vérifiés en termes d'efficacité acoustique sont observés pour une longueur L2 qui est égale ou supérieure à 10 mm, pour des diamètres D standard (par exemple compris entre 16 mm et 17 mm, à titre non limitatif). On notera que les diamètres D1 et D2 sont inchangés pour cette canalisation 300 de la figure 4, en comparaison de la figure 3.

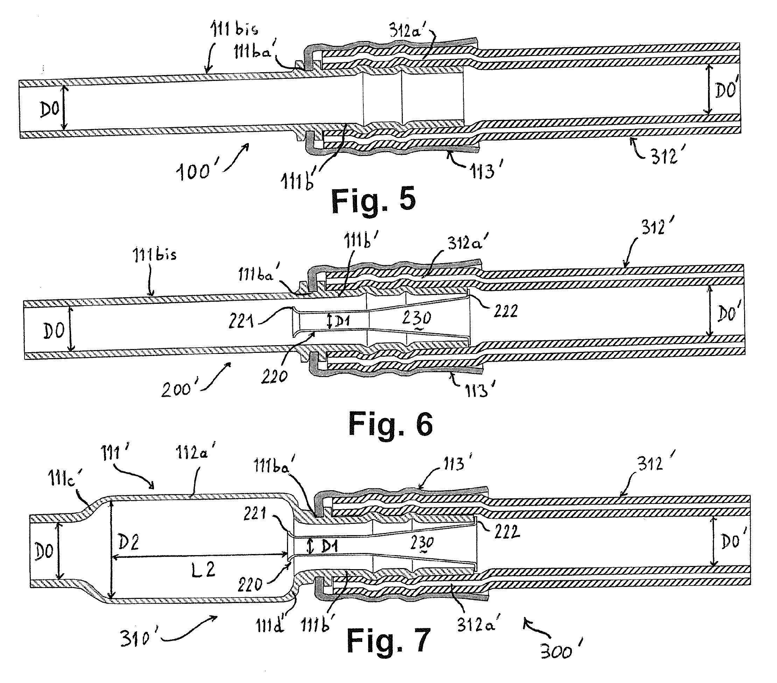

La canalisation 100' illustrée à la figure 5 comporte un embout mâle 111 bis de diamètre interne nominal D0 connecté de manière étanche par sertissage à un embout femelle 312' dans cet exemple de type multicouches avec par exemple une couche intermédiaire de renforcement disposée entre deux couches radialement interne et externe (cet embout 312' présente un diamètre interne nominal D0'). On utilise à cet effet dans cet exemple illustré une bague de sertissage 113' qui enserre une zone terminale de raccordement 312a' de l'embout femelle 312' (la zone 312a' présente un diamètre légèrement supérieur à D0') et qui est rabattue à angle droit pour venir se bloquer dans une gorge circonférentielle 111ba' d'un tronçon d'extrémité 111b' de l'embout mâle 111bis recevant cette zone 312a'.

La canalisation 200' illustrée à la figure 6 incorpore en outre un dispositif réducteur de bruit 220 identique dans cet exemple à celui de la figure 3, qui a son extrémité axialement externe 222 montée contre l'extrémité en regard du tronçon d'extrémité 111b' de l'embout mâle 111 bis et son extrémité axialement interne 221 débouchant axialement vers l'intérieur de ce tronçon 111b'.

La canalisation 300' selon le second mode de l'invention qui est illustré à la figure 7 (cette figure n'est pas non plus réalisée à l'échelle de la réalité) se distingue uniquement de celle de la figure 6 par l'embout mâle 111' de sa conduite 310' qui, contrairement à l'embout mâle 111bis des figures 5 et 6, présente axialement au-delà de l'embout femelle 312' et de la gorge 111ba' recevant la bague de sertissage 113', une portion axiale radialement élargie 112a'. On voit à cette figure 7 que le tronçon d'extrémité 111b' de l'embout mâle 111' est quasiment identique à celui de l'embout mâle 111bis des figures 5 et 6, mais que ce tronçon 111b' se prolonge axialement vers l'intérieur de l'embout mâle 111' par la portion élargie 112a' en forme de capacité acoustique cylindrique de diamètre interne D2. Cette portion élargie 112a' se prolonge elle-même en ses deux extrémités par deux tronçons respectifs convergents 111c' et 111d' dont l'un 111c' opposé à l'embout femelle 312' définit le diamètre interne nominal D0 et l'autre 111d' se prolonge par ce tronçon 111b'.

On a illustré à la figure 7 la longueur axiale L2 mesurée entre l'extrémité axialement interne 221 du dispositif 220 et l'extrémité opposée de la portion élargie 112a' se prolongeant par le tronçon convergent 111c', étant précisé que cette extrémité interne 221 du dispositif 220 débouche axialement à l'intérieur de la portion élargie 112a' ce qui signifie que cette portion 112a' présente une longueur axiale totale supérieure à L2.

A l'instar du premier mode de l'invention illustré à la figure 4, on notera que la portion élargie 112a' de l'embout mâle 111' est telle que sa longueur L2 ainsi mesurée est égale ou supérieure à 0,6 fois le plus petit des diamètres internes précités D0 ou D0', ce qui procure une efficacité acoustique nettement améliorée notamment par rapport à la canalisation 200' de la figure 6.

Comme expliqué ci-dessus, on notera que le dispositif 220 est avantageusement monté, en référence à la figure 1 tant pour les canalisations 300 que 300' :
- à une extrémité de la conduite 6' de la ligne basse pression 6, 6' qui est raccordée au compresseur 2, de sorte que le dispositif 107 soit monté directement à l'aspiration de ce compresseur 2, ou bien
- à une extrémité de la conduite 8' de la ligne haute pression 8, 8' qui est raccordée au compresseur 2, de sorte que le dispositif 107 soit monté directement sur le refoulement de ce compresseur 2.

On notera toutefois que ces canalisations 300, 300' selon l'invention peuvent en variante être montées non seulement à une extrémité de conduite basse et/ou haute pression 6', 8', mais également ailleurs sur ces lignes 6, 6' et/ou 8, 8'.

La Demanderesse a réalisé cinq essais acoustiques T2, I1, I2, I3 respectivement avec les canalisations « témoin » 100 et 200 des figures 2, 3 (essais « témoin » T1 et T2) et avec trois canalisations 300 de la figure 4 (essais de l'invention I1, I2, I3) différant entre elles uniquement par ladite longueur L2. La canalisation 300 utilisée pour chacun de ces cinq essais présentait un diamètre interne nominal D = D0 = D0' = 16,6 mm, un diamètre interne minimal D1 du dispositif 220 égal à 8,0 mm et un diamètre interne maximal D2 de la portion élargie 312a égal à 20,65 mm. Les essais I1, I2 et I3 ont respectivement utilisé trois embouts femelles 312 dont les portions élargies présentaient pour ladite longueur L2 des valeurs de 27 mm, de 35 mm et de 53 mm.

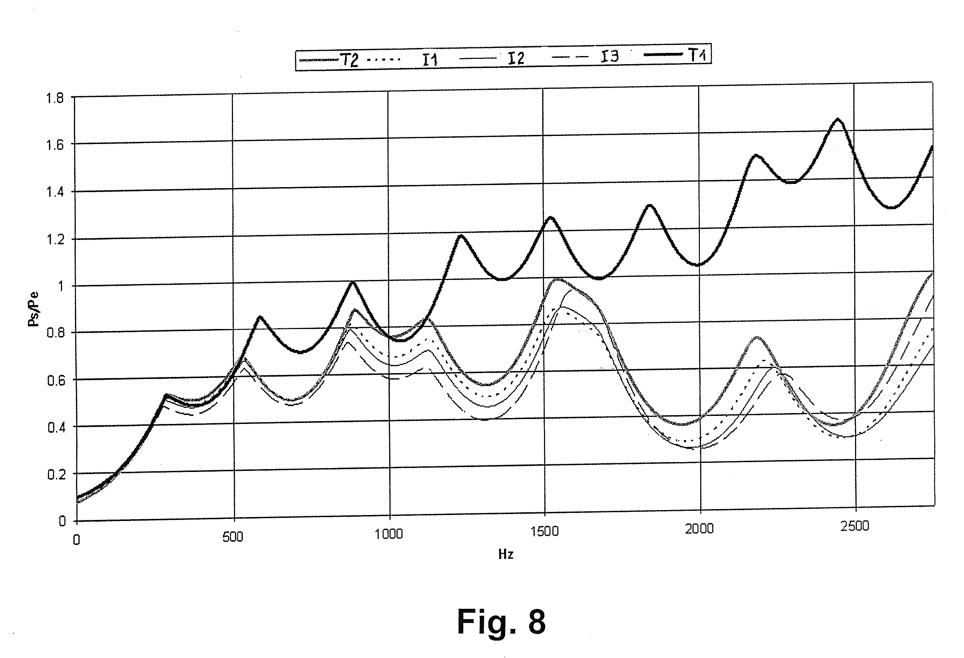

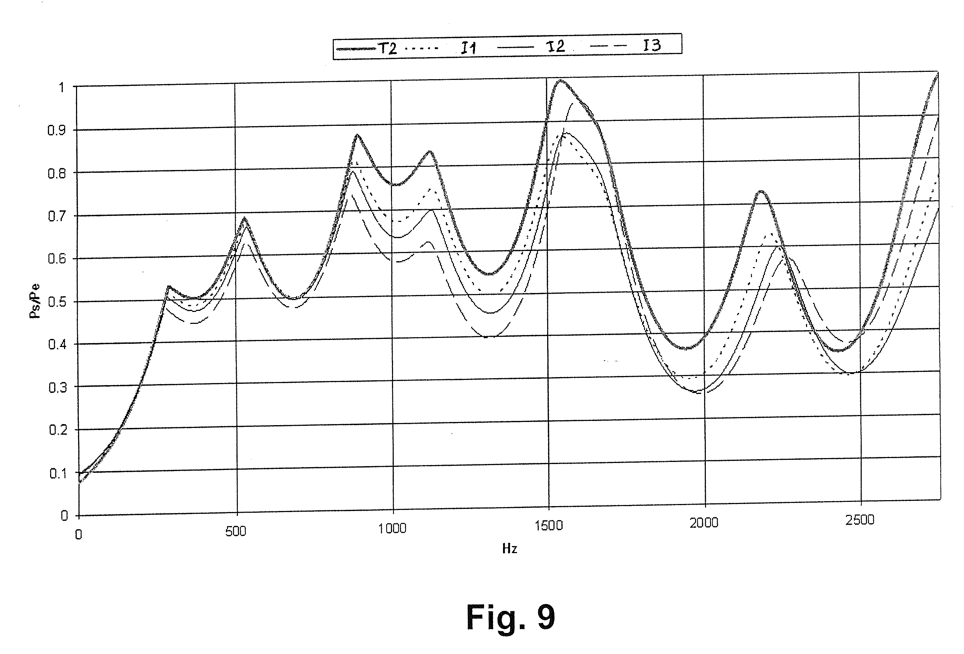

Ces essais acoustiques ont été réalisés avec de l'air à titre de fluide et en statique, dans des conditions normales de température (T ambiante) et de pression (P atmosphérique), étant précisé qu'un autre gaz produirait les mêmes courbes que celles des figures 8 et 9 avec simplement une homothétie de l'échelle des fréquences dans le rapport des célérités des ondes acoustiques, en raison de la compressibilité volumique du gaz.

Le graphique de la figure 8 (ces courbes ont subi un lissage pour plus de lisibilité) montre que la fonction de transfert acoustique Ps/Pe est réduite d'une manière très nette au-delà d'une fréquence de 500 Hz (ce qui témoigne d'une transmission acoustique minimisée, donc d'une efficacité acoustique améliorée) pour les essais I1, I2, I3 de l'invention en comparaison de l'essai « témoin » T1 sans dispositif réducteur de bruit et avec l'embout femelle 112 de l'art antérieur, et que cette fonction de transfert est également réduite d'une manière significative à partir de plus hautes fréquences par rapport à l'essai « témoin » T2 avec dispositif réducteur de bruit mais toujours avec cet embout femelle 112 existant.

Plus précisément et comme cela est encore plus clairement visible au graphique de la figure 9, on déduit de ces courbes I1 à I3 par rapport à T2 que l'efficacité acoustique est d'autant plus améliorée que ladite longueur L2 présente une valeur plus élevée dans la bande de fréquences allant de 800 Hz à 1500 Hz, mais étant précisé que pour des fréquences supérieures à 1500 Hz (comme par exemple entre 1600 Hz et 1750 Hz ou même vers 2700 Hz) l'essai 13 avec la plus grande valeur pour L2 (53 mm) ne procure pas forcément la meilleure efficacité acoustique.

Au vu de l'ensemble des essais réalisés, la Demanderesse a mis en évidence une plage optimale pour ladite longueur L2 qui est inclusivement comprise entre 1,5 . D et 2,4 . D environ, soit entre 25 mm et 40 mm environ.

## Revendications

1. Canalisation (300, 300') pour fluide sous pression de type gazeux ou supercritique pour un circuit de climatisation (1) d'un véhicule automobile ou d'un bâtiment, la canalisation comprenant :
- une conduite (310, 310') comportant un embout tubulaire mâle (111, 111') de diamètre interne nominal D0 et un embout tubulaire femelle (312, 312') qui est connecté de manière étanche à l'embout mâle en une portion axiale élargie (312a) de l'embout femelle ou bien à proximité immédiate d'une portion axiale élargie (112a') de l'embout mâle, cette portion élargie d'embout mâle ou femelle présentant un diamètre interne maximal D2 et l'embout femelle présentant un diamètre interne nominal D0' identique ou non à D0, et
- un dispositif réducteur de bruit (220) globalement tubulaire qui est monté axialement et radialement à l'intérieur de l'embout mâle et qui définit, entre deux extrémités axialement interne (221) et externe (222) de ce dispositif par rapport à l'embout mâle, au moins un canal (230) de passage du fluide dans la direction de l'axe (X) de la conduite, l'extrémité externe (222) du dispositif étant montée de manière étanche contre un bord terminal (111 a) de l'embout mâle au droit de l'embout femelle,
**caractérisée en ce que** ladite portion élargie de l'embout mâle ou femelle présente respectivement, à partir de ladite extrémité axialement interne ou externe du dispositif située au droit de cette portion élargie, une longueur L2 telle que :
L2 ≥ 0,6 . D, où D désigne la valeur commune ou minimale parmi D0 et D0'.

2. Canalisation (300, 300') selon la revendication 1, **caractérisée en ce que** ladite longueur L2 de ladite portion axiale élargie (312a, 112a') est telle que L2 ≥ 10 mm, de préférence pour un circuit de climatisation (1) de véhicule automobile.

3. Canalisation (300, 300') selon la revendication 1 ou 2, **caractérisée en ce que** ladite longueur L2 de ladite portion axiale élargie (312a, 112a') est telle que 1,5 . D ≤ L2 ≤ 2,4 . D.

4. Canalisation (300, 300') selon la revendication 3, **caractérisée en ce que** ladite longueur L2 de ladite portion axiale élargie (312a, 112a') est telle que 25 mm ≤ L2 ≤ 40 mm, de préférence pour un circuit de climatisation (1) de véhicule automobile.

5. Canalisation (300) selon une des revendications précédentes, **caractérisée en ce que** l'embout femelle (312) présente une zone terminale de raccordement comprenant ladite portion axiale élargie (312a) qui présente une géométrie globalement cylindrique de longueur supérieure à ladite longueur L2 pour le montage étanche d'un tronçon terminal de cette portion élargie radialement sur un tronçon d'extrémité (111b) de l'embout mâle (111), via des brides annulaires (113 et 114) enserrant ces tronçons et incluses dans la canalisation, cette portion élargie se prolongeant à l'opposé de l'embout mâle via une portion de liaison convergente (112c) par une autre portion globalement cylindrique (112d) présentant ledit diamètre interne nominal D0'.

6. Canalisation (300') selon une des revendications 1 à 4, **caractérisée en ce que** l'embout mâle (111') présente axialement au-delà de l'embout femelle (312') ladite portion axiale élargie (112a'), laquelle présente une géométrie globalement cylindrique de longueur supérieure à ladite longueur L2, l'embout femelle présentant une zone terminale de raccordement (312a') montée de manière étanche sur un tronçon d'extrémité (111b') de l'embout mâle situé en deçà de cette portion élargie via un organe annulaire de sertissage (113') qui enserre cette zone et qui coopère en butée avec ce tronçon d'extrémité de manière étanche, cette portion élargie se prolongeant en ses deux extrémités par deux tronçons respectifs convergents (111c' et 111d') dont l'un opposé à l'embout femelle définit ledit diamètre interne nominal D0 et l'autre se prolonge par ledit tronçon d'extrémité.

7. Canalisation (300, 300') selon une des revendications précédentes, **caractérisée en ce que** ladite extrémité axialement externe (222) du dispositif réducteur de bruit (220) comporte une collerette radiale (222) montée contre un renflement d'extrémité de l'embout mâle (111) définissant ledit bord terminal (111a) de ce dernier.

8. Canalisation (300, 300') selon une des revendications précédentes, **caractérisée en ce que** le dispositif réducteur de bruit (220) délimite avec l'embout mâle (111), axialement entre lesdites extrémités axialement interne (221) et externe (222) du dispositif, au moins un volume mort annulaire (240) qui ne communique pas avec ledit canal (230) par l'une au moins (222) de ces deux extrémités.

9. Canalisation selon la revendication 8, **caractérisée en ce que** ladite extrémité axialement interne du dispositif est également montée de manière étanche contre l'embout mâle (111), de telle sorte que ledit volume mort annulaire s'étende de ladite extrémité interne à ladite extrémité axialement externe (222) en ne communiquant pas avec ledit canal.

10. Canalisation (300, 300') selon la revendication 8, **caractérisée en ce que** ladite extrémité axialement interne (221) du dispositif (220) forme avec l'embout mâle (111) au moins une zone d'admission pour le fluide qui est localisée radialement entre cette extrémité axialement interne et l'embout mâle et qui communique avec ledit volume mort annulaire (240).

11. Canalisation (300, 300') selon une des revendications 8 à 10, **caractérisée en ce que** le dispositif réducteur de bruit (220) a ladite extrémité axialement interne (221) qui converge vers un tronçon intermédiaire (224) sensiblement cylindrique ou prismatique du dispositif relié à ladite extrémité axialement externe (222) par un tronçon aval divergent (225).

12. Canalisation (300, 300') selon une des revendications 1 à 7, **caractérisée en ce que** le dispositif réducteur de bruit présente une face externe au moins en partie cylindrique qui épouse la face radialement interne de l'embout mâle (111).

13. Circuit de climatisation (1) d'un véhicule automobile ou d'un bâtiment, du type comportant des canalisations (6, 6', 8, 8', 300, 300') destinées à véhiculer un fluide frigorigène gazeux sous pression et au moins un dispositif réducteur de bruit (220) inséré dans au moins l'une desdites canalisations, **caractérisé en ce que** ladite canalisation (300, 300') dans laquelle est inséré ce dispositif est telle que définie à l'une des revendications précédentes.

14. Circuit de climatisation (1) selon la revendication 13 pour un véhicule automobile, **caractérisé en ce que** ladite ou chaque canalisation (6', 8', 300, 300') dans laquelle est inséré ledit au moins un dispositif (220) est raccordée directement à l'aspiration et/ou au refoulement dudit compresseur (2), respectivement dans une ligne basse pression (6, 6') et/ou dans une ligne haute pression (8, 8') dudit circuit, ledit dispositif étant de préférence monté à l'extrémité de ladite canalisation (6') qui débouche sur ladite aspiration et/ou sur ledit refoulement du compresseur (2), respectivement dans ladite ligne basse pression (6, 6') et/ou dans ladite ligne haute pression (8, 8').

15. Circuit de climatisation (1) selon la revendication 14, **caractérisé en ce que** ladite canalisation (6', 300, 300') dans laquelle est inséré ledit dispositif (220) est raccordée directement à l'aspiration dudit compresseur (2) dans une ligne basse pression (6, 6') dudit circuit.

## Patentansprüche

1. Rohrleitung (300, 300') für ein Druckfluid vom gasartigen oder superkritischen Typ für einen Klimatisierungskreislauf (1) eines Kraftfahrzeugs oder eines Gebäudes, wobei die Rohrleitung umfasst:
- eine Leitung (310, 310'), umfassend ein männliches röhrenförmiges Ansatzstück (111, 111') mit nominale Innendurchmesser D0 und ein weibliches röhrenförmiges Ansatzstück (312, 312'), welches auf abdichtende Weise mit dem männlichen Ansatzstück an einem axial vergrößerten Abschnitt (312a) des weiblichen Ansatzstücks oder in unmittelbarer Nähe eines taxial vergrößerten Abschnitts (112a') des männlichen Ansatzstücks verbunden ist, wobei dieser vergrößerte Abschnitt des männlichen oder weiblichen Ansatzstücks einen maximalen Innendurchmesser D2 aufweist und das weiblichen Ansatzstück einen nominalen Innendurchmesser D0' aufweist, welcher identisch zu D0 ist oder nicht, und
- eine insgesamt röhrenförmige Vorrichtung (220) zur Schalldämpfung, welche axial und radial im Inneren des männlichten Ansatzstücks angebracht ist und welche zwischen zwei axial inneren (221) und äußeren (222) Enden dieser Vorrichtung bezüglich des männlichen Ansatzstücks wenigstens einen Kanal (230) für einen Fluiddurchgang in der Richtung der Achse (X) der Leitung definiert, wobei das äußere Ende (222) der Vorrichtung auf abdichtende Weise an einem Endrand (111a) des männlichen Ansatzstücks direkt unter dem weiblichen Ansatzstück angebracht ist,
**dadurch gekennzeichnet, dass** der vergrößerte Abschnitt des männlichen bzw. weiblichen Ansatzstücks, ausgehend von dem axial inneren oder äußeren Ende der sich direkt unter diesem vergrößerten Abschnitt befindenden Vorrichtung, eine Länge L2 aufweist, derart dass:
L2 ≥ 0,6. D, wobei D den gemeinsamen oder minimalen Wert von D0 und D0' bezeichnet.

2. Rohrleitung (300, 300') nach Anspruch 1, dadurch gekennzeichnen, dass, bevorzugt für einen Klimatisierungskreislauf (1) eines Kraftfahrzeuges, die Länge L2 des axial vergrößerten Abschnittes (312a, 112a'] derart ist, dass L2 ≥ 10 mm.

3. Rohrleitung (300, 300') nach Anspruch 1 oder 2, **dadurch gekennzeichnet, dass** die Länge L2 des axial vergrößerten Abschnitts (312a, 112a') derart ist, dass 1,5. D ≤ L2 ≤ 2,4. D.

4. Rohrleitung (300, 300') nach Anspruch 3, **dadurch gekennzeichnet, dass**, bevorzugt für einen Klimatisierungskreislauf (1) eines Kraftfahrzeugs, die Länge L2 des axial vergrößerten Abschnitts (312a,112a') derart ist, dass 25 mm ≤ L2 ≤ 40 mm.

5. Rohrleitung (300) nach einem der vorhergehenden Ansprüche, **dadurch gekennzeichnet, dass** das weibliche Ansatzstück (312) einen Anschlussendbereich aufweiset, welcher den axial vergrößerten Abschnitt (312a) umfasst, welcher eine insgesamt zylindrische Geometrie mit einer Länge größer als die Länge L2 aufweist, für die abdichtende Montage eines Endstücks dieses vergrößerten Abschnitts radial an einem Endstück (111b) des männlichen: Ansatzstücks (111) über ringförmige Flansche (113 und 114), welche diese Stücke umschließen und in der Rohrleitung eingeschlossen sind, wobei dieser vergrößerte Abschnitt sich auf der Gegenseite des männlichen Ansatzstücks über einen zusammenlaufenden Verbindungsabschnitt (112c) verlängert durch einen weiteren insgesamt zylinderischen Abschnitt (112d), welcher den nominalen Innendurchmesser D0' aufweist.

6. Rohrleitung (300') nach einem der Ansprüche 1 bis 4, **dadurch gekennzeichnet, dass** das männliche Ansatzstück (111') axial jenseits des weiblichen Ansatzstücks (312') den axial vergrößerten Abschnitt (112a') aufweist, welcher eine insgesamt zylindrische Geometrie mit einer Länge größer als die Länge L2 aufweist, wobei das weibliche Ansatzstück einen auf abdichtende Weise an einem Endstück (111b') des männlichen Ansatzstücks angebrachten Anschlussendbereich (312a') aufweist, welcher diesseits dieses vergrößerten Abschnitts über ein ringförmiges Presselement (113') angebracht ist, welches diesen Bereich umschließt und welches durch Anschlag mit diesem Endstück auf abdichtende Weise zusammenwirkt, wobei dieser vergrößerte Abschnitt sich an seinen zwei Enden durch zwei jeweils zusammenlaufende Stücke (111c' und 111d') verlängert, von welchen eines, welches gegenüber dem weiblichen Ansatzstück ist, den nominalen Innendurchmesser D0 definiert und das andere sich durch das Endstück verlängert.

7. Rohrleitung (300, 300') nach einem der vorhergehenden Ansprüche, **dadurch gekennzeichnet, dass** das axial äußere Ende (222) der Vorrichtung (220) zur Schalldämpfung einen radialen Kragen (222) umfasst, welcher an einer Endverdickung des männlichen Ansatzstücks (111) angebracht ist, welche den Endrand (111a) des Letzteren definiert.

8. Rohrleitung (300, 300') nach einem der vorhergehenden Ansprüche, **dadurch gekennzeichnet, dass** die Schalldämpfervorrichtung (220) mit dem männlichen Ansatzstück (111) axial zwischen den axial inneren (221) und äußeren (222) Enden der Vorrichtung wenigstens ein ringförmiges Totvolumen (240) definiert, welches nicht über wenigstens eines (222) dieser zwei Enden mit dem Kanal (230) kommuniziert.

9. Rohrleitung nach Anspruch 8, **dadurch gekennzeichnet, dass** das axial innere Ende der Vorrichtung außerdem auf abdichtende Weise an dem männlichen Ansatzstück (111) derart angebracht ist, dass das ringförmige Totvolumen sich von dem inneren Ende bis zu dem axial äußeren Ende (222) erstreckt, ohne mit dem Kanal zu kommunizieren.

10. Rohrleitung (300, 300') nach Anspruch 8, **dadurch gekennzeichnet, dass** das axial innere Ende (221) der Vorrichtung (220) mit dem männlichen Ansatzstück (111) wenigstens einen Zugangsbereich für das Fluid bildet, welcher sich radial zwischen diesem axial inneren Ende und dem männlichen Ansatzstück befindet und welcher mit dem Totvolumen (240) kommuniziert.

11. Rohrleitung (300, 300') nach einem der Ansprüche 8 bis 10, **dadurch gekennzeichnet, dass** die Vorrichtung (220) zur Schalidämpfung das radial innere Ende (221) aufweist, welches in Richtung eines im Wesentlichen zylinderischen oder prismatischen Zwischenstücks (224) der Vorrichtung zusammenläuft, welches mit dem axial äußeren Ende (222) über ein nachgelagertes auseinanderlaufendes Stück (225) verbunden ist.

12. Rohrleitung (300, 300') nach einem der Ansprüche 1 bis 7, **dadurch gekennzeichnet, dass** die Vorrichtung zur Schalldämpfung eine zumindest teilsweise zylindrische Außenseite aufweist, welche sich an die radial innere Seite des männlichen Ansatzstücks (111) anschmiegt.

13. Klimatisierungskreislauf (1) für ein Kraftfahrzeug oder ein Gebäude, von einem Typ, welcher Rohrleitungen (6, 6', 8, 8', 300, 300') umfasst, welche dazu bestimmt sind, ein gasartiges Kühlfluid unter Druck zu transportieren, und wenigstens eine Vorrichtung (220) zur Schalldämpfung umfasst, welche in wenigstens einer der Rohrleitungen eingefugt ist, **dadurch gekennzeichnet, dass** die Rohrleitung (300, 300'), in welche diese Vorrichtung eingefügt ist, derart, wie in einem der vorhergehenden Ansprüche definiert, ist.

14. Klimatisierungskreislauf (1) nach Anspruch 13, für ein Kraftfahrzeug, **dadurch gekennzeichnet, dass** die oder jede Rohrleitung (6', 8', 300, 300'), in welche die wenigstens eine Vorrichtung (220) eingefugt ist, mit der Ansaugung und/oder dem Austritt des Kompressors (2), entsprechend in einer Niederdruckleitung (6, 6') und/oder einer Hochdruckleitung (8, 8') des Kreislaufs, direkt verbunden ist, wobei die Vorrichtung bevorzugt an dem Ende der Rohrleitung (6'), welches an der Ansaugung und/oder an dem Austritt des Kompressors (2) mündet, entsprechend in der Niederdruckleitung (6, 6') und/oder der Hochdruckleitung (8, 8'), angebracht ist.

15. Klimatisierungskreislauf (1) nach Anspruch 14, **dadurch gekennzeichnet, dass** die Rohrleitung (6', 300, 300'), in welche die Vorrichtung (220) eingefügt ist, in einer Niederdruckleitung (6, 6') des Kreislaufs direkt an der Ansaugung des Kompressors (2) angeschlossen ist.

## Claims

1. Duct (300, 300') for fluid under pressure of gas or supercritical type for an air-conditioning circuit (1) of a motor vehicle or a building, the duct comprising:
- a conduite (310, 310') including a tubular male end fitting (111, 111') of nominal inside diameter D0 and a tubular female end fitting (312, 312') that is connected in fluid-tight manner to the male end fitting in an enlarged axial portion (312a) of the female end fitting or in the immediate vicinity of an enlarged axial portion (112a') of the male end fitting, this male or female end fitting enlarged portion having a maximum inside diameter D2 and the female end fitting having a nominal inside diameter D0' identical to D0 or not, and
- a globally tubular noise-reducing device (220) that is mounted axially and radially inside the male end fitting and defines, between an axially internal end (221) and an axially external end (222) of this device relative to the male end fitting, at least one fluid flow channel (230) in the direction of the axis (X) of the conduit, the external end (222) of the device being mounted in fluid-tight manner against a terminal edge (111 a) of the male end fitting in line with the female end fitting,
**characterized in that** said enlarged portion of the male or female end fitting has, respectively starting from said axially internal or external end of the device situated in line with this enlarged portion, a length L2 such that:
L2 ≥ 0.6D, where D designates their common value if D0 and D0' are equal or whichever is the lower of the values D0 and D0 if they are not equal.

2. Duct (300, 300') according to Claim 1, **characterized in that** said length L2 of said enlarged axial portion (312a, 112a') is such that L2 ≥ 10 mm, preferably for a motor vehicle air-conditioning circuit (1).

3. Duct (300, 300') according to Claim 1 or 2, **characterized in that** said length L2 of said enlarged axial portion (312a, 112a') is such that 1.5D ≤ L2 ≤ 2.4D.

4. Duct (300, 300') according to Claim 3, **characterized in that** said length L2 of said enlarged axial portion (312a, 112a') is such that 25 mm ≤ L2 ≤ 40 mm, preferably for a motor vehicle air-conditioning circuit (1).

5. Duct (300) according to any one of the preceding claims, **characterized in that** the female end fitting (312) has a terminal connection area comprising said axial enlarged portion (312a) that has a globally cylindrical geometry of length greater than said length L2 for the fluid-tight mounting of a terminal section of this radially enlarged portion on an end section (111b) of the male end fitting (111), via annular flanges (113 and 114) surrounding these sections and included in the duct, this enlarged portion being extended opposite the male end fitting via a convergent connecting portion (112c) by another globally cylindrical portion (112d) having said nominal inside diameter D0'.

6. Duct (300') according to any one of Claims 1 to 4, **characterized in that** the male end fitting (111') has axially beyond the female end fitting (312') said enlarged axial portion (112a'), which has a globally cylindrical geometry of length greater than said length L2, the female end fitting having a terminal connecting area (312a') mounted in a fluid-tight manner on an end section (111b') of the male end fitting situated short of this enlarged portion via an annular crimping member (113') that tightly surrounds this area and cooperates in abutment fashion with this end section in a fluid-tight manner, this enlarged portion being extended at its two ends by two respective convergent portions (111c' and 111d') of which that opposite the female end fitting defines said nominal inside diameter D0 and the other is extended by said end section.

7. Duct (300, 300') according to any one of the preceding claims, **characterized in that** said axially external end (222) of the noise-reducing device (220) incudes a radial flange (222) mounted against an end enlargement of the male end fitting (111) refining said terminal edge (111a) of the latter.

8. Duct (300, 300') according to any one of the preceding claims, **characterized in that** the noise-reducing device (220) delimits with the male end fitting (111), axially between said axially internal end (221) and said axially external end (222) of the device, at least one annular dead volume (240) that does not communicate with said channel (230) via at least one (222) of these two ends.

9. Duct according to Claim 8, **characterized in that** said axially internal end of the device is also mounted in a fluid-tight manner against the male end fitting (111) so that said annular dead volume extends from said internal end to said axially external end (222) and does not communicate with said channel.

10. Duct (300, 300') according to Claim 8, **characterized in that** said axially internal end (221) of the device (220) forms with the male end fitting (111) at least one admission area for the fluid that is located radially between this axially internal end and the male end fitting and that communicates with said annular dead volume (240).

11. Duct (300, 300') according to any one of Claims 8 to 10, **characterized in that** the noise-reducing device (220) has said axially internal end (221) converging toward a substantially cylindrical or prismatic intermediate section (224) of the device connected to said axially external end (222) by a divergent downstream section (225).

12. Duct (300, 300') according to any one of Claims 1 to 7, **characterized in that** the noise-reducing device has an at least partly cylindrical external face that espouses the radial internal face of the male end fitting (111).

13. Air-conditioning circuit (1) of a motor vehicle or a building, of the type including ducts (6, 6', 8, 8', 300, 300') intended to convey a cooling fluid in the gaseous state under pressure and at least one noise-reducing device (220) inserted into at least one of said ducts, **characterized in that** said duct (300, 300') in which this device is inserted is as defined in any one of the preceding claims.

14. Air-conditioning circuit (1) according to Claim 13 for a motor vehicle, **characterized in that** said or each duct (6', 8', 300, 300') in which said at least one device (220) is inserted is connected directly to the inlet and/or the outlet of said compressor (2), respectively in a low-pressure line (6, 6') and/or in a high-pressure line (8, 8') of said circuit, said device preferably being mounted at the end of said duct (6') that opens onto said inlet and/or said outlet of the compressor (2), respectively in said low-pressure line (6, 6') and/or in said high-pressure line (8, 8').

15. Air-conditioning circuit (1) according to Claim 14, **characterized in that** said duct (6', 300, 300') in which said device (220) is inserted is connected directly to the inlet of said compressor (2) in a low-pressure line (6, 6') of said circuit.
